(19) Europäisches Patentamt
European Patent Office
Office européen des brevets

(11) **EP 4 492 635 A1**

(12) **EUROPEAN PATENT APPLICATION**
published in accordance with Art. 153(4) EPC

(43) Date of publication:
**15.01.2025 Bulletin 2025/03**

(21) Application number: **22930546.1**

(22) Date of filing: **07.09.2022**

(51) International Patent Classification (IPC):
***H02K 1/16*** (2006.01)

(52) Cooperative Patent Classification (CPC):
**Y02T 10/64**

(86) International application number:
**PCT/CN2022/117668**

(87) International publication number:
**WO 2023/168920 (14.09.2023 Gazette 2023/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.03.2022 CN 202210211414**

(71) Applicant: **Ningbo Hengshuai Co., Ltd.
Ningbo, Zhejiang 315032 (CN)**

(72) Inventors:
• **ZHOU, Jianmin
Ningbo, Zhejiang 315032 (CN)**
• **XU, Hengshuai
Ningbo, Zhejiang 315032 (CN)**
• **HE, Hailiang
Ningbo, Zhejiang 315032 (CN)**
• **LIU, Peihai
Ningbo, Zhejiang 315032 (CN)**

(74) Representative: **Ipey
Apex House
Thomas Street
Trethomas
Caerphilly CF83 8DP (GB)**

(54) **HARMONIC MAGNETIC FIELD DRIVING ELECTRIC MOTOR**

(57) A harmonic magnetic field driving electric motor. In the harmonic magnetic field driving electric motor, A, several tooth slots are arranged on a stator lamination, and the number of slots is Z; B, in a circumferential 360-degree mechanical space of a stator, stator windings are divided into m phases according to a connection rule that is set; C, a stator assembly having windings is independently arranged in a free space, a constant direct current is introduced into a winding of any phase, and in the circumferential 360-degree mechanical space of the stator, the number of formed pole pairs of a phase winding magnetic field is Pm; D, the number of wire packs included in each phase of winding is $k = n \times Pm$, where $n = 1, 2, 3 ...$; E, rotor magnetic steel is sequentially arranged in a circumferential direction according to the sequence of an N pole and an S pole, and in a circumferential 360-degree mechanical space of a rotor, the number of formed pole pairs of the rotor magnetic steel is Pr; and F, in a combined space of the circumferential 360-degree mechanical spaces of the stator and the rotor, an electric motor air gap is formed. The number Pr of pole pairs of the rotor magnetic steel of the harmonic magnetic field driving electric motor must satisfy: $Pr = Z \pm Pm$, wherein the number of stator slots of the harmonic magnetic field driving electric motor is $Z = m \times k$, and double-layer windings are used.

Figure 3

**Description**

## TECHNICAL FIELD

The present disclosure relates to an electric motor, and in particular to a harmonic magnetic field driving electric motor.

## BACKGROUND

As a device that converts electrical energy into rotating mechanical energy, the motor has become an indispensable and irreplaceable core device for people to pursue a better life. Permanent magnet motors have the advantages of small size and relatively high efficiency, they are widely used in all walks of life. In particular, rare earth permanent magnetic materials have the significant advantage of high magnetic energy product and therefore are widely used in the field of brushless DC motor (hereinafter referred to as BLDC) and permanent magnet synchronous motor (hereinafter referred to as PMSM), it has become the mainstream development direction and trend of the motors. Since the rare earth permanent magnetic material is a non-renewable resource, how to fully improve the utilization rate of this material has become a key research topic in countries around the world. Therefore, there is an urgent need to design a new and advantageous harmonic magnetic field driving electric motor. Compared with traditional motors, under the same output power, the size of this motor can be reduced, which means that the weight of the motor is also reduced simultaneously, and therefore it significantly saves the cost of use of motor materials, especially the cost of rare earth permanent magnetic materials, greatly enhancing the competitive advantage of the product.

## SUMMARY

The technical problem to be solved by the present disclosure is to provide a harmonic magnetic field driving electric motor to compensate for the above-mentioned shortcomings in the prior art, so that it can reduce the volume and increase the power density.

The technical solution adopted by the present disclosure to solve the above existing problems is: a harmonic magnetic field driving electric motor, including: a rotor assembly, a stator assembly, a control module and a wire harness. The wire harness is connected to the control module through welding, and the control module is fixed to the stator assembly through positioning stubs and the elastic fixing clamps (clips, fasteners). The wire harness passes through a radial hole provided in the stator assembly and is led out from an axial hole. The cylindrical bearings provided in the stator assembly support and position the rotor assembly. When the harmonic magnetic field driving electric motor is energized, the rotor assembly rotates in the circumferential direction. The main structure is expressed as follows:

A. a plurality of tooth slots are provided in stator laminations, and the number of the slots is Z;

B. in a 360° space around a stator, stator windings are divided into m phases according to a preset connection rule;

C. a stator assembly having the windings is independently placed in a free space (without motor assembly), and any phase winding is supplied with a constant direct current; in the 360° space around the stator, the number of pole pairs of magnetic field for any phase winding formed is Pm;

D. each phase winding contains wire packets, the number of the wire packets is $k = n \times Pm$ (n = 1, 2, 3...);

E. magnetic steels of a rotor are alternately arranged in the order of N pole and S pole in a circumferential direction; in a 360° space in a circumference of the rotor, the number of pole pairs of the magnetic steels of the rotor formed is Pr;

F. an electric motor air gap is formed in the 360° space around the stator and in the circumference of the rotor.

In an embodiment of the present disclosure, the number Z of the slots of the stator laminations satisfies: Z=15; the number Pr of the pole pairs of the magnetic steels of the rotor satisfies: Pr=10; the number Pm of the pole pairs of magnetic field for each phase winding satisfies: Pm=5; and the number k of the wire packets of each phase winding satisfies: k=5.

More specifically, the harmonic magnetic field driving electric motor of the present disclosure will be further described:

The principle of the harmonic magnetic field driving electric motor: A. Whether it is BLDC control or PMSM control, the necessary condition for the rotation of the motor rotor is that the number of pole pairs of the magnetic field generated by the stator windings in the air gap of the motor is equal to the number of pole pairs of the rotor permanent magnets; B. After the stator windings are energized, a fundamental wave magnetomotive force is generated in the air gap of the motor, under the action of magnetic conductance of the stator's tooth slots, a series of harmonic magnetic fields are distributed along the air gap's space; C. When the number of pole pairs of a specific air gap harmonic magnetic field is equal to the number Pr of pole pairs of the permanent magnet rotor, a stable electromagnetic torque will be output.

In order to meet the principle of harmonic magnetic field driving electric motor, the following conditions must be met:

A. The number Pr of the pole pairs of the rotor of the harmonic magnetic field driving electric motor must satisfy: $Z \pm Pm = Pr$. The specific expression is as follows:

①According to Ampere's loop law: $\sum H \times L = W \times I = F$, where H-magnetic field strength, L-magnetic circuit length, W-number of coil turns, I-coil current, F-magnetomotive force;

② In the closed circuit (loop) of the motor magnetic field, it is mainly closed through the ferromagnetic substance and the motor air gap, so the Ampere's loop law for the motor is expressed as: $H(\delta) \times L(\delta) + H(\text{ferromagnetic}) \times L(\text{ferromagnetic}) = W \times I = F$. Since in ferromagnetic substance, H(ferromagnetic) is very small and it can be approximately equal to zero, so $H(\delta) \times L(\delta) = W \times I = F$;

③The relationship between magnetic induction intensity B and magnetic field intensity H is: $B = \mu \times H$, where $\mu$-relative magnetic permeability;

④So $F = WI = B(\delta) \times L(\delta)/\mu 0$, where $\mu_0$-relative magnetic permeability of air;

⑤The magnetic induction intensity of the motor air gap can be expressed as: $B(\delta) = F \times \mu 0 / L(\delta) = F \times \Lambda(\delta)$, where $\Lambda(\delta)$-magnetic conductance of the motor air gap. The smaller the air gap, the greater the magnetic conductance;

⑥The spatial distribution of the magnetomotive force F in the air gap of the motor is a rectangular wave, which can be expressed according to the Fourier series as:

$$F(\alpha) = (2/\pi) \times F \times [\sin(Pm \times \alpha) + (1/3) \times \sin(3 \times Pm \times \alpha) + \ldots + (1/n) \times \sin(n \times Pm \times \alpha)],$$

where n=1, 2, 3..., $\alpha$-represents the mechanical space angle along the circumferential direction of the air gap. It can be seen that the fundamental wave amplitude of the magnetomotive force is the largest, and the expression of the fundamental wave magnetomotive force is:

$$F1(\alpha) = (2/\pi) \times F \times \sin(Pm \times \alpha) = (2 \times WI/\pi) \times \sin(Pm \times \alpha)$$

⑦The spatial distribution of the motor air gap tooth magnetic conductance $\Lambda\delta$ is approximately a rectangular wave, which can be expressed according to the Fourier series as:

$$\Lambda\delta(\alpha) = \Lambda 0 + \Lambda 1 \times \cos(Z \times \alpha) + \Lambda 2 \times \cos(2 \times Z \times \alpha) + \ldots + \Lambda n \times \cos(n \times Z \times \alpha),$$

where n=1, 2, 3..., the fundamental wave magnetic conductance amplitude is the largest, and its expression is: $\Lambda\delta 1(\alpha) = \Lambda 0 + \Lambda 1 \times \cos(Z \times \alpha)$;

⑧The expression of the magnetic induction intensity produced by the stator winding fundamental wave magnetomotive force distributed along the space in the motor air gap under the modulation of the stator tooth magnetic conductance: $B(\alpha) = F \times \Lambda(\delta) = (2 \times WI/\pi) \times \sin(Pm \times \alpha) \times [\Lambda 0 + \Lambda 1 \times \cos(Z \times \alpha)] = Bm0 \times \sin(Ps \times \alpha) + Bm1 \times \sin(Pm \times \alpha) \times \cos(Z \times \alpha)$, where, $Bm0 = 2 \times WI \times \Lambda 0/\pi$, $Bm1 = 2 \times WI \times \Lambda 1/\pi$, using the trigonometric formula theorem: $\sin(a) \times \cos(b) = [\sin(a+b) + \sin(a-b)]/2$, change the above formula, we get:

$$B(\alpha) = Bm0 \times \sin(Pm \times \alpha) + (Bm1/2) \times \sin[(Z+Pm) \times \alpha] + (Bm1/2) \times \sin[(Z-Pm) \times \alpha]$$

**It can** be seen from the above formula that the fundamental wave magnetomotive force generated by the energization of the stator phase winding can produce the following three magnetic fields in the motor air gap:

a. The fundamental wave magnetomotive force magnetic field with the number of pole pairs Pm, the nature of this magnetic field is equivalent to the magnetic field formed by the stator without slots;

b. The tooth harmonic permeability (magnetic conductance) magnetic field with the number of pole pairs (Z+Pm), the nature of this magnetic field is equivalent to the magnetic field formed after the fundamental wave magnetomotive force is modulated by the stator slots;

c. The tooth harmonic permeability (magnetic conductance) magnetic field with the number of pole pairs (Z-Pm), the nature of this magnetic field is equivalent to the magnetic field formed after the fundamental wave magnetomotive force is modulated by the stator slots.

⑨ Selection of the number Pr of magnetic pole pairs of the rotor of the harmonic magnetic field driving electric motor:

a. According to the basic principles of motor operation, the motor will output stable electromagnetic torque only when the number of magnetic pole pairs of the rotor and the number of magnetic pole pairs formed by the stator coils are equal;

b. According to the above principle, the number Pr of magnetic pole pairs of the rotor of the harmonic magnetic field driving electric motor must satisfy: Z+Pm=Pr or Z-Pm=Pr.

B. Selection of the number Z of the stator slots of the harmonic magnetic field driving electric motor: Z=m×k, the specific expression is as follows:

Each wire packet (wire package, wire pack, coil packet) has two component sides, and each stator slot is a double-layer winding, two component sides are placed on the upper and lower layers or on the left and right sides. This means that the number of stator slots is equal to the total number of wire packets.

Each phase winding contains k wire packets, the motor is divided into m phases, then the number Z of the stator slots of the motor needs to satisfy: Z=m×k, and double-layer windings are adopted.

C. The relationship between the number k of wire packets of each phase of the harmonic magnetic field driving electric motor and the number Pm of magnetic pole pairs formed by wire packets of each phase: k=n×Pm, where n=1, 2, 3..., the specific expression is as follows:

From the principle of electromagnetic field, it can be known that one wire packet can only form one pair of magnetic poles, so the number of wire packets k ≥ the number of magnetic pole pairs of the wire packets Pm. In the 360° mechanical space around the circumference of the motor air gap, taking into account the principle of symmetry of the air gap magnetic field amplitude: the number of wire packets forming one pair of poles can be 1, 2, 3,...; the number of wire packets forming two pairs of poles can be 2, 4, 6,...; the number of wire packets forming 3 pairs of poles can be 3, 6, 9,...; the number of wire packets forming Pm pairs of poles is: k=n×Pm, where n=1 ,2,3....

According to the principle conditions, when a three-phase (m=3) winding structure is used, the combination of the number of stator slots/number of pole pairs of rotor magnetic steels/number of wire packets per phase of the harmonic magnetic field driving electric motor is as follows:

| Example No. | The number of pole pairs of wire packets for each phase, Pm | The number of wire packets of each phase, k | The number of slots of stator, Z | The number of pole pairs of magnetic steels of rotor, Pr | The number of cogging torque fluctuation cycles |
|---|---|---|---|---|---|
| Example 1 | 2 | 2 | 6 | 4, 8 | 24, 48 |
| Example 2 | 2 | 6 | 18 | 16, 20 | 288,360 |
| Example 3 | 4 | 4 | 12 | 8, 16 | 48, 96 |
| Example 4 | 4 | 8 | 24 | 20, 28 | 120, 168 |
| Example 5 | 5 | 5 | 15 | 10, 20 | 60, 120 |

Control method of tharmonic magnetic field driving electric motor: it is suitable for BLDC control method and PMSM control method, where BLDC is a square wave voltage (current) drive method and PMSM is a sine wave voltage (current) drive method.

The principle of harmonic magnetic field driving electric motor to increase power volume density:

A. Basic evaluation indicators of permanent magnet motor: As a rotating mechanical device, the motor will inevitably produce vibration noise, and the cogging torque pulsation of the motor is an important source of vibration and noise in the motor. Therefore, while the motor is pursuing the power volume density (watt/litre) to the extreme, the cogging torque pulsation must also be reduced to ensure that the motor vibration and noise are within a reasonable range, so that increasing the power volume density has practical significance;

B. The main means to improve the power volume density of permanent magnet motor: a. Optimize the motor magnetic circuit: the improvement effect is limited; b. Select permanent magnet materials with higher magnetic energy product: it causes a significant increase in manufacturing costs; c. Reduce the air gap value between the stator and rotor of the motor: basically, the air gap magnetic field amplitude is inversely proportional to the air gap value, so the improvement effect is obvious and significant;

C. Reducing the negative impact of the motor air gap value on the motor cogging torque pulsation: The cogging torque amplitude is proportional to the square of the air gap magnetic field amplitude, so reducing the motor air gap value will significantly increase the motor cogging torque pulsation, resulting in significant increase in vibration and noise of the motor;

D. An effective method to reduce the amplitude of motor cogging torque pulsation:

a. Under the condition of maintaining a fixed motor air gap value, theoretical research shows that an effective method to reduce motor cogging torque pulsation is to increase the number of motor cogging torque fluctuation cycles (the number of cycles of cogging torque fluctuations in one rotation of the rotor), wherein, the number of fluctuation cycles is equal to the least common multiple of the number of stator slots and the number of rotor poles;

b. The comparison of the numbers of fluctuation cycles between the harmonic magnetic field driving electric motor and the traditional motor under the same number of stator slots is as follows:

| Example | Harmonic magnetic field driving electric motor | | Traditional permanent magnet motor | |
|---|---|---|---|---|
| The number of stator slots | The number of pole pairs of rotor | The number of cogging torque fluctuation cycles | The number of pole pairs of rotor | The number of cogging torque fluctuation cycles |
| 6 | 4 | 24 | 2 | 12 |
| | 8 | 48 | / | / |
| 12 | 8 | 60 | 5 | 60 |
| | 16 | 96 | 7 | 84 |
| 15 | 10 | 60 | 5 | 30 |
| | 20 | 120 | / | / |
| 18 | 16 | 288 | 7 | 126 |
| | 20 | 360 | 8 | 144 |
| 24 | 20 | 120 | 8 | 48 |
| | 20 | 168 | 10 | 120 |

It can be seen from the comparison results in the above table that when the number of stator slots is the same, the number of cogging torque fluctuation cycles of the harmonic magnetic field driving electric motor increases significantly compared with the traditional permanent magnet motor.

Optionally, an inner arc surface, dovetail groove left bevel surfaces and dovetail groove right bevel surfaces provided in the rotor lamination cooperate with outer arc surfaces, left bevel surfaces and right bevel surfaces provided on the magnetic steels to position the magnetic steels in the radial and circumferential directions, thereby improving the positioning accuracy of the magnetic steels to ensure the smooth operation of the harmonic magnetic field driving electric motor.

Optionally, a radial hole and an axial hole are provided in the motor shaft of the stator assembly to facilitate the passage of the wire harness through the radial hole and the axial hole to allow the wire harness to extend out.

Optionally, elastic fixing clamps (clips, fasteners) and positioning stubs are provided on the stator assembly, which can improve the positioning accuracy of the control module and make its fixing more firm and reliable.

It is also possible that the magnetic steels of the rotor assembly and the casing are designed to be connected in a surface-mounted manner. The rotor laminations and dovetail groove structures are not used for positioning. The bonding process for magnetic steels uses auxiliary tooling for positioning, which can has equal positioning effect for the magnetic steels, so it is also feasible.

It is also possible to consider the convenience of the processing of the magnetic steels to divide one magnetic steel into multiple sections, which will not affect the performance and effect of the harmonic magnetic field driving electric motor according to the present disclosure.

Alternatively, the harmonic magnetic field driving electric motor can be designed with a structure of outer stator and inner rotor according to different uses, which can also achieve the same performance and effect as the structure of outer rotor and inner stator in the embodiment of the present disclosure.

It is also possible that the harmonic magnetic field driving electric motor is designed with a structure of outer stator and inner rotor, and the magnetic steel bonding method of the rotor assembly can be surface-mounted or surface-buried, which can also achieve the same performance and effect.

It is also possible that the harmonic magnetic field driving electric motor is designed with a structure of outer stator and inner rotor and adopts PMSM control method. The magnetic steels of the rotor assembly can be embedded, which can also achieve the same performance and effect.

Compared with the existing technology, the advantage of the present disclosure is that the harmonic magnetic field driving electric motor can greatly increase the number of cogging torque fluctuation cycles through the set combination of the number of stator slots and the number of rotor magnet poles, and can maintain or reduce the cogging torque fluctuation amplitude of the harmonic magnetic field driving electric motor while maintaining the air gap value of the harmonic magnetic field driving electric motor. Through the set stator winding method, the number of pole pairs of the harmonic magnetic field generated by the stator is equal to the number of pole pairs of the rotor magnetic steels, forming a stable electromagnetic torque output. Using a smaller air gap of the harmonic magnetic field driving electric motor, it greatly increases the air gap magnetic field strength, so that the output power of the harmonic magnetic field driving electric motor is increased proportionally, and the power volume density of the harmonic magnetic field driving electric motor is also synchronously proportionally increased. Compared with traditional motors, under the condition of the same output power, the volume of the harmonic magnetic field driving electric motor is reduced by over a half, which means that the weight of the harmonic magnetic field driving electric motor is also reduced by over a half. It can significantly save the cost of motor materials, especially the cost of rare earth permanent magnet materials, that greatly enhances the product's market competitiveness. This harmonic magnetic field driving electric motor structure can match traditional BLDC and PMSM motor control modules, and it has strong versatility in control.

**BRIEF DESCRIPTION OF THE DRAWINGS**

FIG. 1 is a perspective view of a harmonic magnetic field driving electric motor according to an embodiment of the present disclosure.
FIG. 2 is an exploded schematic view of the harmonic magnetic field driving electric motor according to the embodiment of the present disclosure.
FIG. 3 is a schematic structural view of the harmonic magnetic field driving electric motor according to the embodiment of the present disclosure.
FIG. 4a is a partial view of the A-A cross-sectional view in FIG. 3.
FIG. 4b is a partial view of the B-B cross-sectional view in FIG. 3.
FIG. 5a is a partial enlarged view of F portion in FIG. 4a.
FIG. 5b is a partial enlarged view of P portion in FIG. 4b.
FIG. 6 is an exploded schematic view of the rotor assembly according to the embodiment of the present disclosure.
FIG. 7 is a partial rotated and enlarged view of W portion in FIG. 6.
FIG. 8 is a perspective view of the magnetic steels according to the embodiment of the present disclosure.
FIG. 9 is an exploded schematic view of the stator assembly according to the embodiment of the present disclosure.
FIG. 10 is a cross-sectional view of the motor shaft according to the embodiment of the present disclosure.
FIG. 11 is a schematic structural view of a harmonic magnetic field driving electric motor with an outer rotor according to another embodiment of the present disclosure.
FIG. 12 is a schematic structural view of a harmonic magnetic field driving electric motor with an inner rotor according to yet another embodiment of the present disclosure.
FIG. 13 is a schematic structural view of a harmonic magnetic field driving electric motor with an inner rotor according to yet another embodiment of the present disclosure.
FIG. 14 is a schematic structural view of a harmonic magnetic field driving electric motor with an inner rotor according to yet another embodiment of the present disclosure.

**DETAILED DESCRIPTION OF EMBODIMENTS**

The present disclosure will be further described below in conjunction with the accompanying drawings and embodiments.

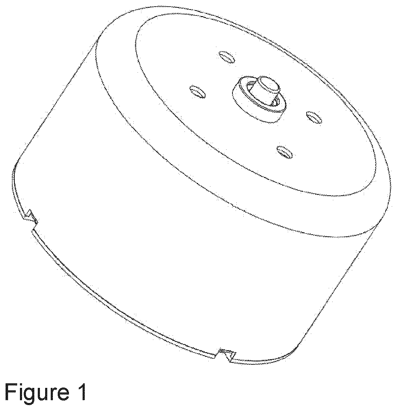

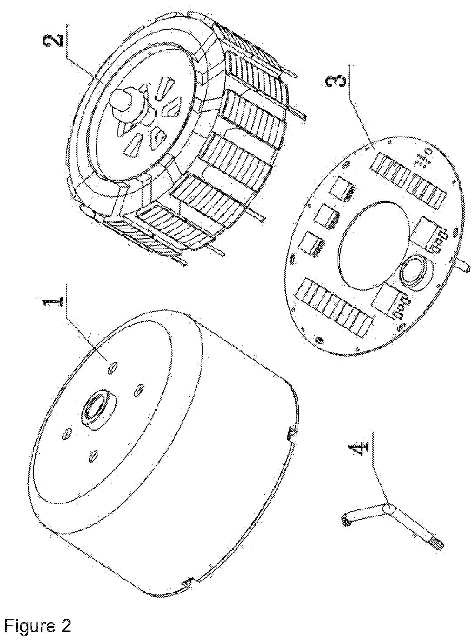

As shown in FIGS. 1 and 2, the harmonic magnetic field driving electric motor includes a rotor assembly 1, a stator assembly 2, a control module 3 and a wire harness 4. When the harmonic magnetic field driving electric motor is energized and working, it outputs torque through the rotation of the rotor assembly 1, thereby converting electrical energy into mechanical energy.

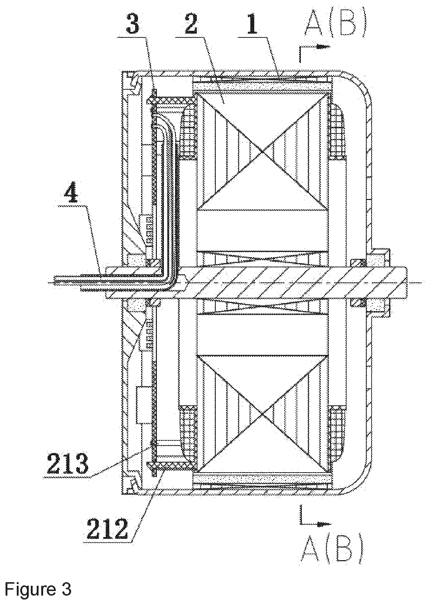

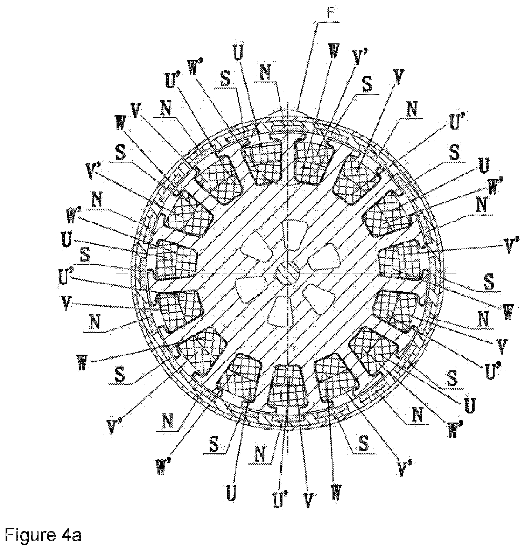

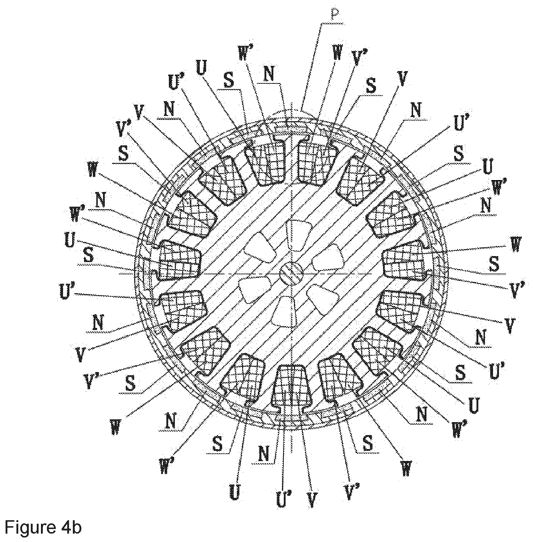

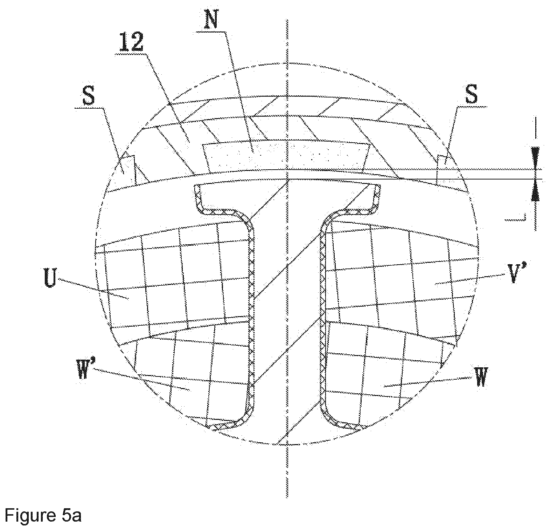

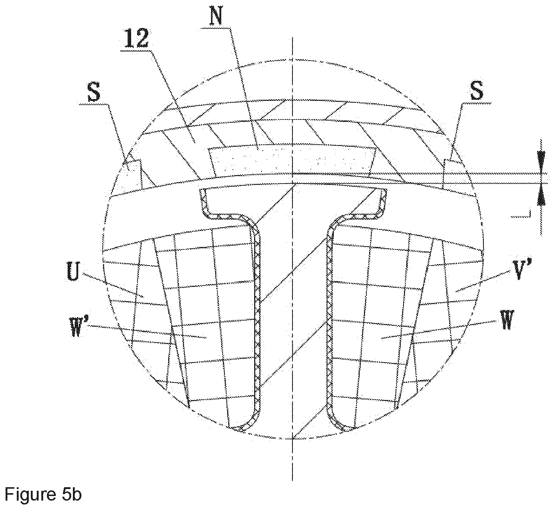

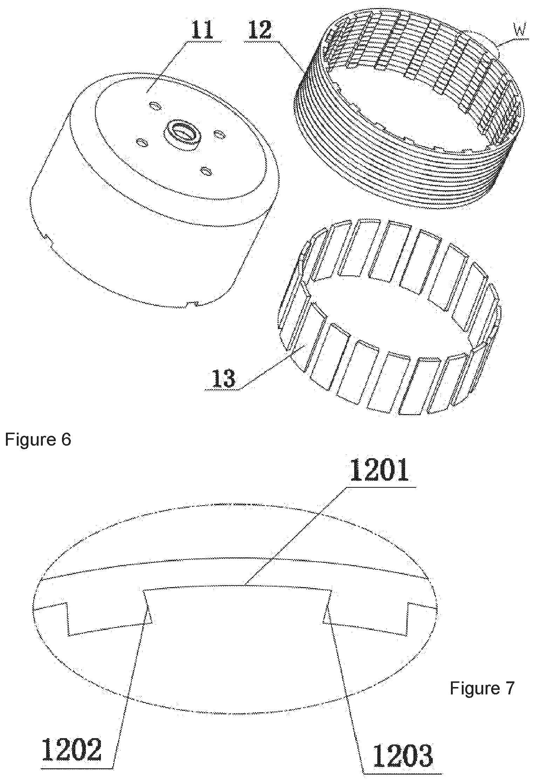

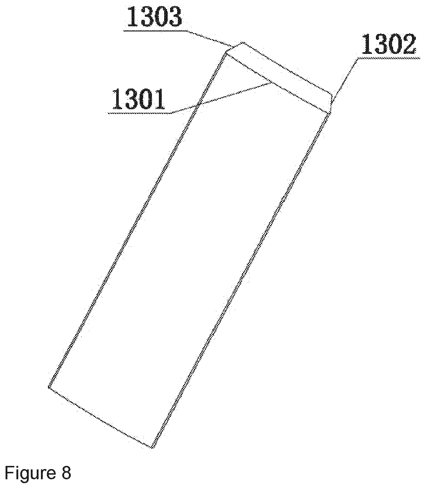

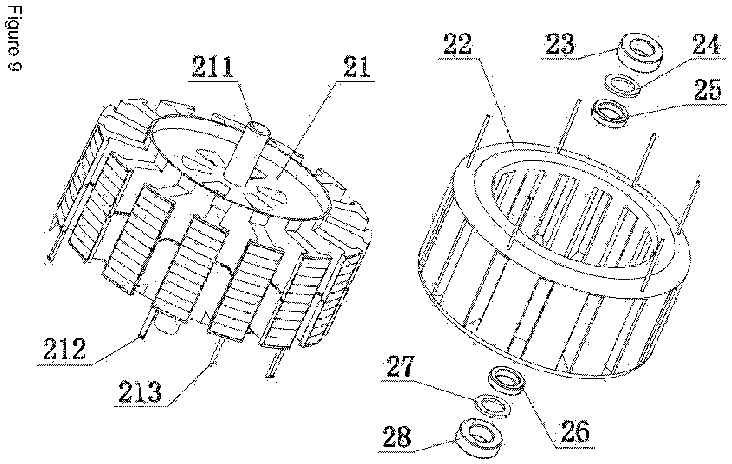

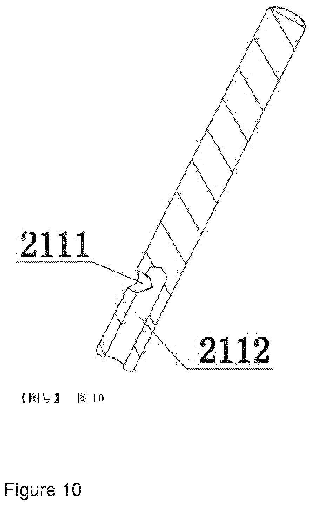

As shown in FIGS. 3 to 10, the rotor assembly 1 is composed of a casing 11, rotor laminations 12 and magnetic steels (magnets) 13.

The rotor laminations 12 are bonded to the inner circumferential surface of the casing 11 through adhesive.

The rotor laminations 12 have 20 magnetic steels (10 pairs of poles) evenly arranged on the inner circle.

The above-mentioned rotor laminations 12 are provided with an inner arc surface 1201, dovetail groove left bevel surfaces 1202, and dovetail groove right bevel surfaces 1203, which respectively cooperate with an outer arc surface 1301, left bevel surfaces 1302, and right bevel surfaces 1303 of the magnetic steels 13 to position the magnetic steels 13 in radial and circumferential directions. The magnetic steels 13 are bonded in the dovetail grooves of the rotor laminations 12 through adhesive in an alternating arrangement of N poles and S poles to improve the smooth operation of the harmonic magnetic field driving electric motor.

The laminations of the stator assembly 2 are evenly provided with 15 tooth slots in the outer circumference, the number of pole pairs of wire packets of each phase is 5, and the number of wire packets of each phase is 5.

Each wire packet (wire package, wire pack, coil packet) has two component sides, and the design of each stator slot adopts a double-layer winding, two component sides are placed on the upper and lower layers or on the left and right sides. The number of stator slots is equal to the total number of wire packets.

The outer circle of the laminations of the stator assembly 2 and the magnetic steels 13 of the rotor assembly 1 form an air gap L of the harmonic magnetic field driving electric motor.

The wire harness 4 and the control module 3 are connected by welding.

The stator assembly 2 is provided with elastic fixing clamps 212 and positioning stubs 213 to position and fix the control module 3, making the fixation of the control module 3 more firm and reliable.

A radial hole 2111 and an axial hole 2112 are provided in the motor shaft 211 of the stator assembly 2 to facilitate the wire harness 4 to pass through the radial hole 2111 and the axial hole 2112 to allow the wire harness 4 to extend out.

The cylindrical bearings 23 and 28 provided in the stator assembly 2 are fixed in the casing 11 of the rotor assembly 1 and play a role in supporting and positioning the rotor assembly 1. When the harmonic magnetic field driving electric motor is energized and working, the rotor assembly can rotate in a circumferential direction. The stator assembly 2 is provided with stop rings 25 and 26 to fix the cylindrical bearings 23 and 28 respectively to achieve axial limitation of the rotor assembly 1, and the wear-resistant gaskets 24 and 27 are provided to reduce friction.

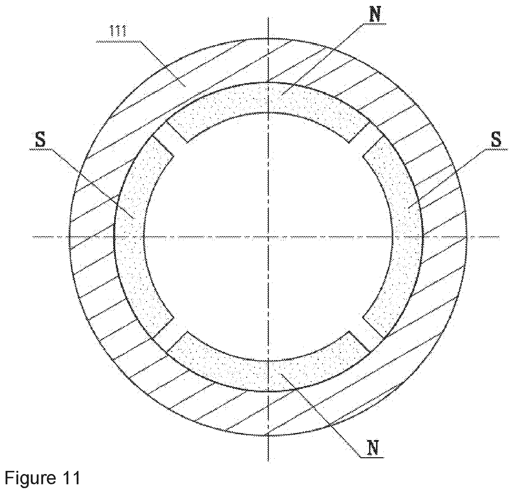

As shown in FIG. 11, the magnetic steels N and S of the rotor assembly are designed to be connected to the casing 111 in a surface-mounted manner, without using the dovetail groove positioning of the rotor laminations, which can achieve the same positioning effect for the magnetic steels.

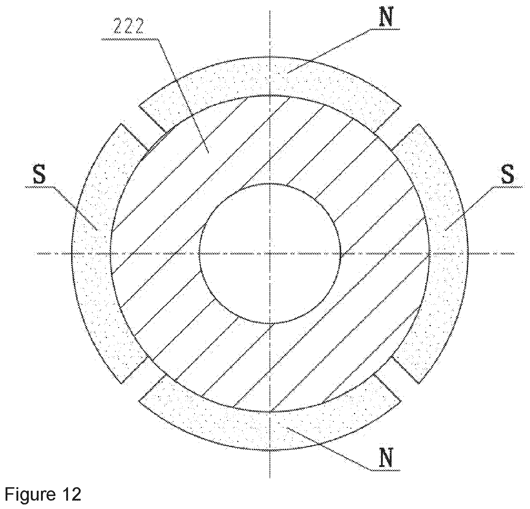

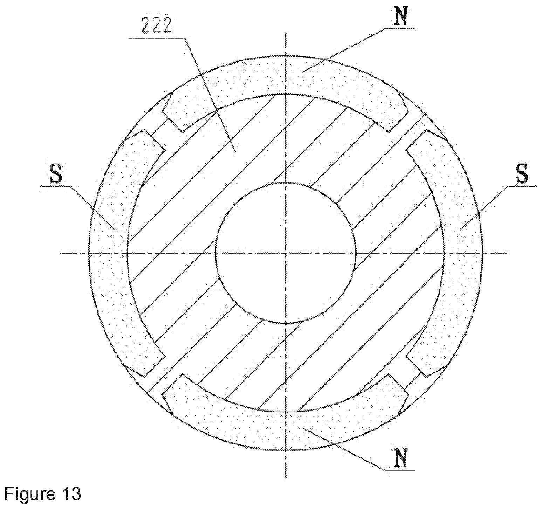

As shown in FIGS. 12 and 13, the harmonic magnetic field driving electric motor is designed with a structure of outer stator and inner rotor. The magnetic steels N and S of the rotor assembly are bonded to the rotor laminations 222 using a surface-mounted or surface-buried method, which can achieve the same performance and effect.

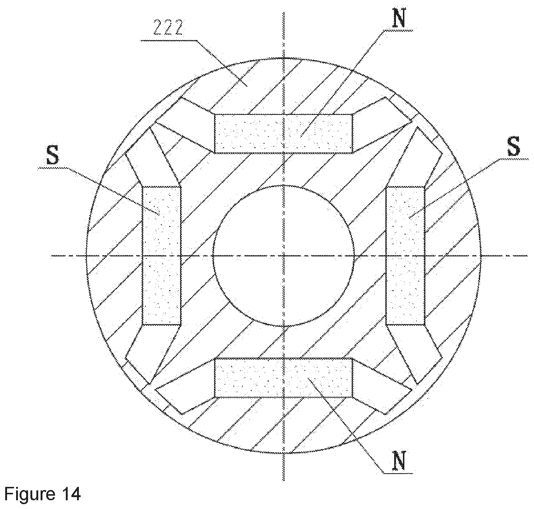

As shown in FIG. 14, the harmonic magnetic field driving electric motor is designed with a structure of outer stator and inner rotor, and adopts PMSM control mode. The magnetic steels N and S of the rotor assembly can be embedded, which can also achieve the same performance and effect.

**Claims**

1.    A harmonic magnetic field driving electric motor, wherein:

a plurality of tooth slots are provided in stator laminations, and the number of the slots is Z;
in a 360° space around a stator, stator windings are divided into m phases according to a preset connection rule;
a stator assembly having the windings is independently placed in a free space, and any phase winding is supplied with a constant direct current; in the 360° space around the stator, the number of pole pairs of magnetic field for any phase winding formed is $P_m$;
each phase winding contains wire packets, the number of the wire packets is $k = n \times P_m$, n = 1, 2, 3...;
magnetic steels of a rotor are alternately arranged in the order of N pole and S pole in a circumferential direction; in a 360° space in a circumference of the rotor, the number of pole pairs of the magnetic steels of the rotor formed is $P_r$;
an electric motor air gap is formed in the 360° space around the stator and in the circumference of the rotor;
wherein the number $P_r$ of the pole pairs of the magnetic steels of the rotor of the harmonic magnetic field driving electric motor satisfies: $P_r = Z \pm P_m$; and wherein the number Z of the slots of the stator of the harmonic magnetic field driving electric motor satisfies: $Z = m \times k$, and double-layer windings are adopted.

2.    The harmonic magnetic field driving electric motor according to claim 1, wherein the number Z of the slots of the stator laminations satisfies: $Z = 15$; the number $P_r$ of the pole pairs of the magnetic steels of the rotor satisfies: $P_r = 10$; the number $P_m$ of the pole pairs of magnetic field for each phase winding satisfies: $P_m = 5$; and the number k of the wire packets of each phase winding satisfies: $k = 5$.

Figure 1

Figure 2

Figure 3

Figure 4a

Figure 4b

Figure 5a

Figure 5b

11    12                                        W

13

Figure 6

1201

1202              1203

Figure 7

1303

1302

1301

Figure 8

Figure 9

【图号】 图 10

Figure 10

Figure 11

Figure 12

Figure 13

Figure 14

## INTERNATIONAL SEARCH REPORT

| | International application No. |
|---|---|
| | **PCT/CN2022/117668** |

### A.    CLASSIFICATION OF SUBJECT MATTER

H02K 1/16(2006.01)i

According to International Patent Classification (IPC) or to both national classification and IPC

### B.    FIELDS SEARCHED

Minimum documentation searched (classification system followed by classification symbols)

H02K

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 谐波, 电机, 极对数, 槽数, 双层绕组, 定子, 转子, harmonic, motor, pole pairs, tooth grooves, double layers, stator, rotor

### C.    DOCUMENTS CONSIDERED TO BE RELEVANT

| Category* | Citation of document, with indication, where appropriate, of the relevant passages | Relevant to claim No. |
|---|---|---|
| X | CN 113890220 A (NINGBO HENGSHUAI CO., LTD.) 04 January 2022 (2022-01-04) claims 1 and 2 | 1-2 |
| X | US 2002190587 A1 (ROBERT BOSCH GMBH) 19 December 2002 (2002-12-19) description, paragraphs 23-27, and figures 1-2 | 1-2 |
| PX | CN 217063429 U (NINGBO HENGSHUAI CO., LTD.) 26 July 2022 (2022-07-26) claims 1 and 2 | 1-2 |
| PX | CN 114598082 A (NINGBO HENGSHUAI CO., LTD.) 07 June 2022 (2022-06-07) claims 1 and 2 | 1-2 |
| A | CN 102570753 A (SHENZHEN INSTITUTES OF ADVANCED TECHNOLOGY, CHINESE ACADEMY OF SCIENCES) 11 July 2012 (2012-07-11) entire document | 1-2 |
| A | CN 107104567 A (HARBIN UNIVERSITY OF SCIENCE AND TECHNOLOGY) 29 August 2017 (2017-08-29) entire document | 1-2 |

☐ Further documents are listed in the continuation of Box C.        ☑ See patent family annex.

| | |
|---|---|
| \*    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **14 November 2022** | **21 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117668**

| Patent document cited in search report | | | Publication date (day/month/year) | Patent family member(s) | | | Publication date (day/month/year) |
|---|---|---|---|---|---|---|---|
| CN | 113890220 | A | 04 January 2022 | None | | | |
| US | 2002190587 | A1 | 19 December 2002 | DE | 50115545 | D1 | 19 August 2010 |
| | | | | JP | 2004509599 | A | 25 March 2004 |
| | | | | WO | 0225796 | A1 | 28 March 2002 |
| | | | | EP | 1323225 | A1 | 02 July 2003 |
| | | | | US | 6703756 | B2 | 09 March 2004 |
| | | | | EP | 1323225 | B1 | 07 July 2010 |
| CN | 217063429 | U | 26 July 2022 | None | | | |
| CN | 114598082 | A | 07 June 2022 | None | | | |
| CN | 102570753 | A | 11 July 2012 | AU | 2012361425 | A1 | 21 August 2014 |
| | | | | WO | 2013097766 | A1 | 04 July 2013 |
| | | | | CN | 102570753 | B | 28 January 2015 |
| | | | | AU | 2012361425 | B2 | 16 April 2015 |
| CN | 107104567 | A | 29 August 2017 | None | | | |

Form PCT/ISA/210 (patent family annex) (January 2015)